(19) **Europäisches Patentamt**

**European Patent Office**

**Office européen des brevets**

(11) Veröffentlichungsnummer: **0 061 755**
**B1**

(12) # EUROPÄISCHE PATENTSCHRIFT

(45) Veröffentlichungstag der Patentschrift: **12.11.86**

(51) Int. Cl.⁴: **B 43 L 13/02**

(21) Anmeldenummer: **82102608.5**

(22) Anmeldetag: **27.03.82**

(54) **Rechnergesteuerte Plotteranordnung.**

(30) Priorität: **30.03.81 DE 3112551**

(43) Veröffentlichungstag der Anmeldung:
**06.10.82 Patentblatt 82/40**

(45) Bekanntmachung des Hinweises auf die
Patenterteilung:
**12.11.86 Patentblatt 86/46**

(84) Benannte Vertragsstaaten:
**AT BE CH DE FR GB IT LI LU NL SE**

(56) Entgegenhaltungen:
**CH-A- 475 675**
**DE-A-2 450 576**
**GB-A-1 030 331**
**US-A-3 693 066**
**US-A-3 714 714**
**US-A-3 936 712**

(73) Patentinhaber: **BZ Plankenhorn KG**
**Mühlgasse 22**
**D-7208 Spaichingen (DE)**

(72) Erfinder: **Däuble, Herbert**
**Hauptstrasse 132**
**D-7208 Spaichingen (DE)**

(74) Vertreter: **Neugebauer, Erich, Dr.**
**Postfach 31**
**D-8000 München 26 (DE)**

Courier Press, Leamington Spa, England.

# Beschreibung

Die Erfindung betrifft eine Laufwagen-Zeichenmaschine mit einer auf einem Zeichenbrett angeordneten Zeichenfläche und mit einem mittels Laufwagen über die Zeichenfläche verfahrbaren Zeichenkopf.

Bei Zeichenmaschinen dieser Art ist es bekannt, elektronisch gesteuerte, auf die Zeichenfläche auflegbare Plotter zu verwenden, um auf der Zeichenmaschine hergestellte Zeichnungen zu beschriften, zu vermaßen oder um Normteile, Wiederholteile oder dgl., die in einem besonderen Programm gespeichert sind, in die Zeichnung einzutragen.

Nachteilig an derartigen Plottern ist es, daß sie nur eine relativ begrenzte Zeichenfläche bis etwa DIN A3 aufweisen und daß ihre bei der Bearbeitung eines größeren Zeichenformats daher mehrfach erforderliche Positionierung in einer definierten Lage bezüglich der vorbereiteten Zeichnung relativ zeitraubend und schwierig ist und eine erhebliche Gefahr von Fehlern mit sich bringt. Nachteilig ist es zudem, daß entweder der Plotter zum Zeichenplatz, insbesondere zu einer Zeichenmaschine, transportiert werden muß, wenn die vorbereitenden Arbeiten abgeschlossen sind, oder daß die vorbereitete Zeichnung zum Arbeitsplatz für den Plotter transportiert und dort wieder fixiert werden muß.

Bei Geräten zur Herstellung großer kartographischer Pläne (GB—A—1 030 331) ist es bekannt, an den Seitenflächen einer großen Tischfläche Laufschienen für einen verfahrbaren und in bestimmten Stellungen feststellbaren Laufwagen vorzusehen. Auf diesem Laufwagen ist ein weiterer, in zwei zueinander senkrechten Richtungen verfahrbarer Laufwagen verschiebbar, der Schreibgeräte zum Beschriften der Pläne trägt, die selbst vorher auf einem anderen Gerät gezeichnet worden sind.

Ausgehend von der eingangs angegebenen Laufwagen-Zeichenmaschine liegt der Erfindung die Aufgabe zugrunde, eine derartige Zeichenmaschine so mit einem Plotter zu versehen, daß ein zeitraubendes Positionieren von Plotter und Zeichnung zueinander entfällt.

Diese Aufgabe wird durch die in dem Anspruch 1 aufgeführten Mittel gelöst.

Die erfindungsgemäße Laufwagen-Zeichenmaschine bietet den Vorteil, daß der Transport des Plotters zur Zeichenmaschine oder der der Zeichnung zum Arbeitsplatz des Plotters entfallen. Der Plotter ist nach der Erfindung auf der Laufwagen-Zeichenmaschine gelagert. Solange diese zum Anfertigen einer Zeichnung benutzt wird, kann der Plotter in eine die Zeichenarbeit nicht behindernde Lage geschoben werden, zum Beschriften oder zu sonstigen ergänzenden Arbeiten ist er dann sofort bereit, ohne daß ein größerer Zeitaufwand zu seinem Positionieren erforderlich ist. Der besondere Vorteil der erfindungsgemäßen Kombination von Zeichenmaschine und Plotter besteht darin, daß eine auf der Laufwagen-Zeichenmaschine gezeichnete Zeichnung auf dem Zeichenbrett verbleiben und dann durch den Plotter ergänzt werden kann, wobei zunächst einmal wegen desselben Zeichenbretts, an dem die Führungsschienen für die Zeichenkopfanordnung der Zeichenmaschine einerseits und dem Plotter andererseits angebracht sind, die ganue X-Y-Positionierung des Zeichenblattes gewährleistet ist. Außerdem bereitet es keine Schwierigkeiten, auch abwechselnd mit der Zeichenmaschine und mit dem Plotter zu arbeiten, wenn beispielsweise nach dem Einzeichnen einer Teilkonstruktion mit Hilfe des Plotters die Zeichenarbeiten mit der Zeichenmaschine fortgesetzt werden sollen.

In den Unteransprüchen sind Möglichkeiten gekennzeichnet, wie die Vereinigungs einer Laufwagen-Zeichenmaschine mit einem Plotter besonders vorteilhaft ausgebildet werden kann. Dabei ergeben sich ganz besondere Vorteile, wenn die Zeichenmaschine rechnergesteuert ist, bei der die Möglichkeit besteht, die verschiedenen Daten über die Ansetzpunkte des Plotters und über die an diesen Ansetzpunkten jeweils zu zeichnenden Symbole, Teilfiguren usw. beim Zeichnen mit der Zeichenmaschine in den Speicher des Rechners einzugeben.

Gegenstand der Europäischen Teilanmeldung, Anmeldenummer: 85100673.4, veröffentlicht am 10. Juli 1985, Veröffentlichungsnummer: EP—A— 0 148 160 ist ein Verfahren zum Anfertigen von Zeichnungen und eine Zeichenmaschine zum Durchführen dieses Verfahrens, wobei ein Plotter kein notwendiges Element der Erfindung darstellt, sondern nur bei einer vorteilhaften Weiterbildung der Erfindung vorgesehen ist.

Weitere Einzelheiten und Vorteile der Efindung werden nachstehend anhand von Zeichnungen näher erläutert. Es zeigen:

Fig. 1 eine schematische perspektivische Darstellung einer ersten bevorzugten Ausführungsform einer Zeichenmaschine mit einem Plotter gemäß der Erfindung und

Fig. 2 eine schematische perspektivische Darstellung einer abgewandelten Ausführungsform einer erfindungsgemäßen Zeichenmaschine.

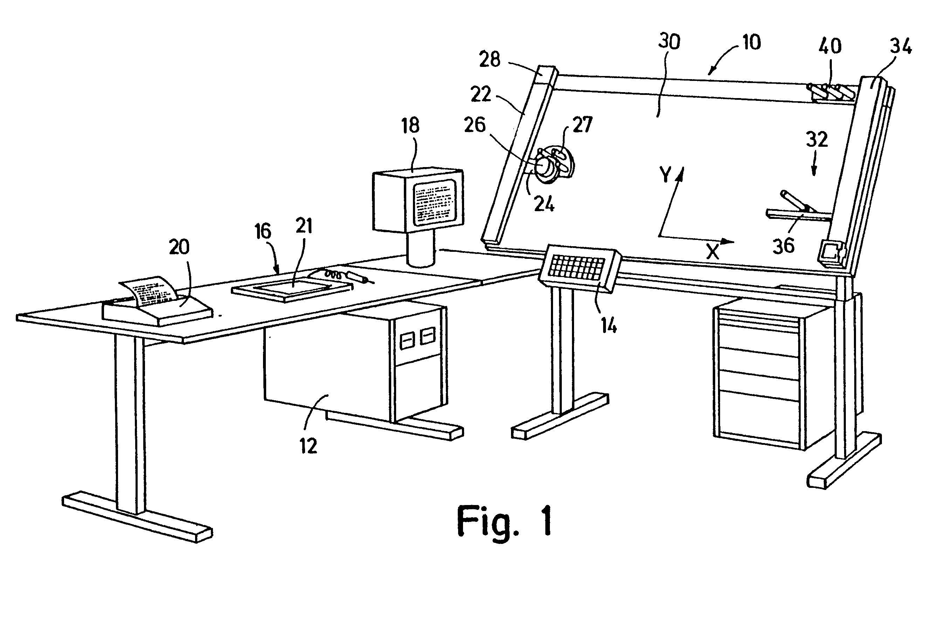

Im einzelnen zeigt Fig. 1 einen Arbeitsplatz mit einer Laufwagen-Zeichenmaschine und einer Plotteranordnung, an dem eine modifizierte Laufwagen-Zeichenmaschine 10 mit einem zugehörigen Rechner 12, beispielsweise einem Mikrocomputer mit Diskettenlaufwerken, sowie ein Plotter 32 vorgesehen sind. Außerdem ist an der Zeichenmaschine 10 eine in horizontaler Richtung, also in X-Richtung verfahrbare Tastatur 14 vorgesehen, die Über entsprechende Leitungen (nicht dargestellt) mit der Zeichenmaschine 10 und dem Rechner 12 verbunden ist. Weiterhin ist im rechten Winkel zur Zeichenmaschine 10 noch ein Arbeitstisch 16 vorgesehen, auf dem sich mit dem Rechner 12 verbundene Zusatzgeräte befinden, nämlich ein schwenkbarer Datenmonitor 18, eine Drucker/Schreibmaschinen-Anordnung 20 und ein Graphic-Tablett 21.

Der Plotter 32 ist bei der Zeichenmaschine 10 am rechten Rand des Zeichenbretts vorgesehen und mit einem Schreibstiftmagazin 40 versehen.

Der Plotter 32 ist mit einem zusätzlichen Laufwagen der Zeichenmaschine 10 verbunden, dessen Tragarm 34 in X-Richtung des Zeichenbretts 30 verfahrbar ist. Mit dem Plotter 32 ist es möglich, nach der Erstellung einer Zeichnung mit den Zeichenstiften 27 aufgrund der gespeicherten Zusatzdaten die endgültige Fertigstellung der Zeichnung vorzunehmen, wobei die Plotter-Positionierung aufgrund seiner Verbindung mit der Laufschiene des Zeichenbretts keinerlei Probleme mehr mit sich bringt, so daß die Ergänzung der Zeichnung wegen der geringen Trägheit des Schreibstifts 36 mit der für Plotter typischen hohen Arbeitsgeschwindigkeit vorgenommen werden kann.

Die Zeichenmaschine 10 umfaßt eine in X-Richtung verfahrbare, in ihrer äußersten linken Stellung gezeigte Laufwageneinrichtung 22, die mit einem Zeichenkopfträger 24 versehen ist, der einen Schreib/Lesestift-Träger 26 aufweist, der im Prinzip als einfache Halterung für einen Schreib- bzw. Zeichenstift sowie einen Lesestift ausgebildet sein kann. Der Schreib/Lesestift-Träger ist beim Ausführungsbeispiel als Revolverkopf mit mehreren — in Fig. 1 drei — Stiften 27 ausgestaltet, er wird nachstehend daher der Einfachheit halber als Stiftrevolver 26 bezeichnet. Schließlich befindet sich am oberen Ende der Laufwageneinrichtung 22 noch das Gehäuse 28, welches Bestandteil der X-Y-Führung ist und die erforderliche Servoelektronik mit mindestens einem Positioniermotor und Einrichtungen zur Wegmessung enthält.

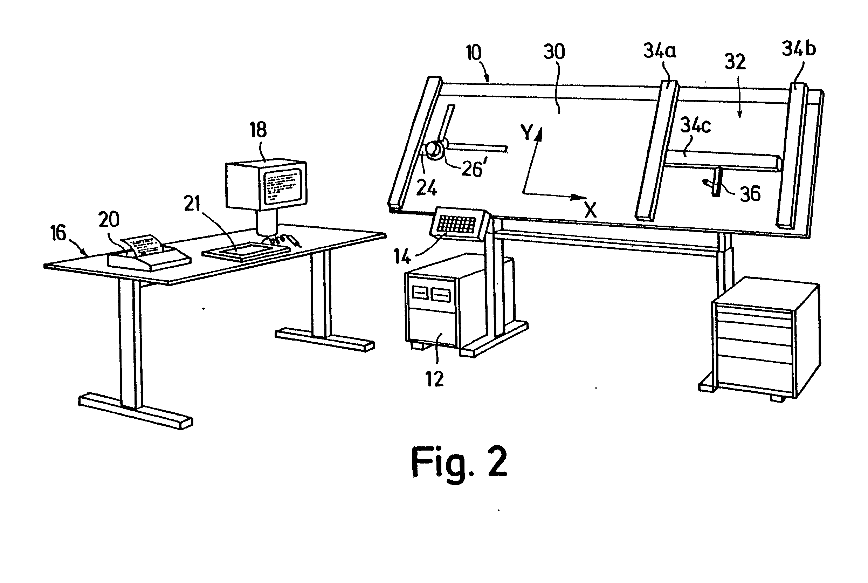

Bei dem in Fig. 1 gezeigten Arbeitsplatz besteht bei Auswechslung des Stiftrevolvers 26 gegen einen normalen Zeichenkopf 26' mit Linealen, wie er in Fig. 2 gezeigt ist, die Möglichkeit, "ganz normal" zu zeichnen, wobei die Laufwagen-Zeichenmaschine 10 des betrachteten Zeichengeräts nicht mit dem konventionellen Gewichtsausgleich arbeitet, sondern stattdessen im Gehäuse 28 elektronische Gewichts- und Reibungsausgleichseinrichtungen aufweist. Diese ermöglichen ebenfalls eine leichte Beweglichkeit des Zeichenkopfes und sorgen auch bei aufgestelltem Zeichenbrett 30 — dies entspricht der in Fig. 1 gezeichneten Situation — dafür, daß der Zeichenkopf in der Lage bleibt, in die er von Hand bewegt wurde. Andererseits eröffnen der Rechner 12 und der Datenmonitor 18 auch bei diesem normalen Zeichenbetrieb die Möglichkeit der Anzeige der X-Koordinaten, der Y-Koordinaten und gegebenenfalls der Winkelstellung des Zeichenkopfs.

Wenn anstelle des in Fig. 2 gezeigten normalen Zeichenkopfes 26' mit dem Zeichenkopfträger 24 der Stiftrevolver 26 nach Fig. 2 verbunden ist, dann besteht anders als bei den bisher üblichen Zeichengeräten auf der Basis von Laufwagen-Zeichenmaschinen die Möglichkeit, durch Verfahren des Stiftrevolvers 26 gegenüber dem Zeichenbrett 30 direkt mit dem jeweils in der Zeichenposition befindlichen Zeichenstift 27 zu zeichnen. Ferner kann nunmehr über die zwischen der Zeichenmaschine 10 und dem Rechner 12 bestehenden Leitungsverbindungen eine unmittelbare Speicherung der Koordinatendaten für die mit dem Zeichenstift 27 gezeichnete Linie erfolgen. Auf diese Weise werden zunächst einmal die Daten gesammelt, die später bei einer automatischen Steuerung des Zeichenstiftes 27 durch den Rechner 12 eine genaue Rekonstruktion einer früher erstellten Zeichnung gestatten, wobei gegebenenfalls erforderliche Ergänzungen und Korrekturen Berücksichtigung finden können. Bei diesem "freien Zeichnen" mit dem jeweils ausgewählten, vom Stiftrevolver 26 getragenen Zeichenstift 27 arbeitet der elektronische Gewichtsausgleich so, daß die vom Zeichner eingeleiteten Bewegungen des Stiftrevolvers durch die Servoelektronik unterstützt werden, so daß sich der Stiftrevolver ebenso frei bewegen läßt wie der Zeichenkopf 26' einer normalen Zeichenmaschine.

Ferner kann man beim Zeichnen mit dem Zeichenstift 27 einer fest vorgegebenen Linie folgen. Bei dieser Arbeitsweise werden die Daten für die betreffende Linie, beispielsweise in Form der Koordinaten der Endpunkte einer geraden Linie oder in Form der Daten über Mittelpunkt und Radius eines zu zeichnenden Kreises, zuvor an der Tastatur 14 eingetastet, wobei die Möglichkeit besteht, über die Eingaben an der Tastatur 14 auch zugeordnete Unterprogramme aus dem Rechner 12 abzurufen. Aufgrund der damit vorgegebenen Daten werden die Einrichtungen der Servoelektronik dann so angesteuert, daß sich für das Verfahren des Stiftrevolvers 26 praktisch eine elektronische Kulissenführung ergibt, die das Zeichnen einer bestimmten, fest vorgegebenen Linie erzwingt.

Während des Verfahrens des Stiftrevolvers 26 längs der durch die elektronische Kulissenführung vorgegebenen Linie hat der Zeichner dann Gelegenheit, beim Erreichen bestimmter Punkte der Linie über die Tastatur 14 zusätzliche Daten in den Rechner 12 einzugeben, welche beispielsweise Hilfspunkte für die Vermaßung, Punkte für die Anbringung von Bezugszeichen, Punkte für die Ergänzung der Zeichnung mit vorgegebenen Teilfiguren, Punkte für die Anbringung von Bearbeitungszeichen usw. betreffen können.

Ein besonderer Vorteil des Zeichengeräts besteht ferner darin, daß dieses auch im "Kopierbetrieb" arbeiten kann. In diesem Fall wird auf das Zeichenbrett 30 eine vorbereitete Zeichnung aufgespannt, deren einzelne Linien dann mit einem vom Stiftrevolver getragenen Lesestift abgetastet werden, wobei dieser "Lesestift", der beispielsweise ein einfacher, nicht schreibender Stahlstift mit abgerundeter Spitze sein kann, an den interessierenden Zeichnungslinien entlanggeführt wird, um deren Koordinatendaten in den Speicherteil des Rechners 12 zu übernehmen, wobei Zitterbewegungen bzw. Ungenauigkeiten bei der Linienabtastung mit frei, von Hand geführtem Stiftrevolver 26 durch entsprechende elektronische Korrekturschaltungen des Rechners korrigiert werden können, wobei aber auch die Möglichkeit in Betracht zu ziehen ist, den Stiftrevolver mit den beispielsweise bei Stoffzuschneidemaschinen bekannten Abtasteinrichtungen auszustatten, so daß die Abtastung der Zeichnung mehr oder weniger vollautomatisch erfolgen kann.

Der besondere Vorteil des betrachteten Zeichengeräts, beim Erstellen einer Zeichnung Zusatzinformationen für vorgegebene Koordinatenpunkte eingeben zu können, kommt dann zum Tragen, wenn das Zeichengerät gemäß Fig. 1 durch einen Plotter ergänzt wird.

Zusätzliche Arbeitserleichterungen ergeben sich bei dem Arbeitsplatz gemäß Fig. 1 ferner dadurch, daß speziell für die Eingabe der Plotterdaten auch die Drucker/Schreibmaschinen-Anordnung 20 zur Verfügung steht, an der beispielsweise komplette Stücklisten zur Zeichnungsergänzung geschrieben werden können und eine entsprechende Ansteuerung des Plotters 32 ermöglichen. Insgesamt ergeben sich folgende Einsatzmöglichkeiten:

1. Elektronische Anzeige der Koordinaten auf dem Bildschirm des Datenmonitors.

2. Das Arbeiten mit einem elektronischen Lineal (Abstände und Längen sind programmierbar).

3. Zusätzliche maßstabgetreue Anzeige bzw. Umrechnen in andere Maßeinheiten.

4. Überarbeiten vorhandener Zeichnungen (Maßstabsübernahme).

5. Arbeiten mit dem Graphics-Tablett (Zeichnungen bzw. Symbole können bis zur vollen Größe der Arbeitsfläche erfaßt, digitalisiert und gespeichert werden).

6. Kurvenanalyse.

Da die Bahnführung für den Stiftrevolver 26 je nach Rechnerprogramm auch komplizierte Formen erlaubt, kann dieser manuell längs der freigegebenen Linien, beispielsweise zum Zeichnen von Kreisbahnen, Symbolen, Zeichen und mathematischen Funktionen verwendet werden. Damit entfällt die Notwendigkeit für die Verwendung von Zirkeln, Schablonen, Kurvenlinealen usw. Weiterhin können Kurven durch Anfahren der wichtigsten Punkte näherungsweise mit Hilfe des Rechners berechnet und dann gezeichnet werden. Schließlich kann das erfindungsgemäße Zeichengerät auch zum Zeichnen gestrichelter bzw. strichpunktierter Linien eingesetzt werden, wobei der Schreib/Lesestift-Träger zu diesem Zweck mit einer steuerbaren Stiftaufsetzmechanik ausgerüstet wird, die über den Rechner ansteuerbar ist, wodurch beispielsweise auch erreicht werden kann, daß beim Zeichnen unterbrochener Linien nicht gerade Lücken derselben auf die Kreuzungspunkte mit anderen Linien fallen.

Die in Fig. 2 gezeigte Plotteranordnung gemäß der Erfindung unterscheidet sich von der vorstehend anhand von Fig. 1 erläuterten Plotteranordnung im wesentlichen dadurch, daß die Laufwagen-Zeichenmaschine 10 mit dem üblichen Zeichenkopf 26' und den daran befestigten Linealen ausgebildet ist. Das Zeichenbrett ist jedoch in X-Richtung beträchtlich verlängert, um Platz für das Aufhängen des Plotters 32 zu schaffen, dessen Trageinrichtung bei diesem Ausführungsbeispiel als Rahmen 34a, 34b mit zwei Führungsarmen ausgebildet ist, die in Y-Richtung verlaufen und zwischen denen ein in X-Richtung verlaufender Führungsarm 34c mit dem Schreibstift 36 geführt ist.

Obwohl bei dem Arbeitsplatz gemäß Fig. 2 eine weitgehend konventionelle Zeichenmaschine 10 verwendet wird, ist ähnlich wie bei dem Ausführungsbeispiel gemäß Fig. 1 wieder eine längs der Zeichenmaschine 10 verfahrbare Tastatur 14 vorgesehen, die wieder mit einem zugeordneten Rechner 12 verbunden ist. Der Rechner 12 und die Tastatur 14 dienen bei dieser Ausgestaltung der Erfindung der Steuerung des Plotters 32. Dieser kann beim normalen Zeichnen aufgrund der Überlänge des Zeichenbretts 30 völlig aus dem Arbeitsbereich der Zeicheneinrichtungen herausgefahren werden. Mit ihm ist andererseits gegebenenfalls nach Abnahme des Zeichenkopfes 26' und der Lineale vom Zeichenkopfträger 24 durch Verfahren längs der Führungsschiene am Zeichenbrett die gesamte Zeichenfläche erfaßbar. Dabei können, wie auch bei dem Ausführungsbeispiel gemäß Fig. 1, deutlich spürbare Raststellungen vorgesehen sein, die das Positionieren des Plotters in definierten Stellungen bezüglich des Ursprungs für die mit der Zeichenmaschine 10 auszuführenden Zeichenarbeiten erleichtern.

Man erkennt, daß auch bei der einfachen Ausgestaltung der Erfindung gemäß Fig. 2 bereits erhebliche Vorteile gegenüber der bisher üblichen Arbeitsweise erreichbar sind, bei der die Zeichenmaschine einerseits und der Plotter andererseits im allgemeinen völlig getrennte und nicht aufeinander abgestimmte Einrichtungen sind.

**Patentansprüche**

1. Laufwagen-Zeichenmaschine (10) mit einer auf einem Zeichenbrett (30) angeordneten Zeichenfläche und mit einem mittels Laufwagen über die Zeichenfläche verfahrbaren Zeichenkopf (26'), dadurch gekennzeichnet, daß außer dem Zeichenkopf (26') eine ebenfalls mittels Laufwagen über die Zeichenfläche verfahrbare Plottertrageinrichtung (34; 34a, 34b) mit einem rechnergesteuerten Plotter (32) vorgesehen ist, dessen Schreibstift (36) entsprechend den Steuerbefehlen des Rechners (12) relativ zur Plottertrageinrichtung jeweils in einem begrenzten Teilbereich der Zeichenfläche der Zeichenmaschine (10) bewegbar ist.

2. Zeichenmaschine nach Anspruch 1, dadurch gekennzeichnet, daß die Plottertrageinrichtung als Tragarm (34) ausgebildet ist, der mittels eines Laufwagens längs einer sich längs eines Randes des Zeichenbrettes (30) erstreckenden Führung verfahrbar ist.

3. Zeichenmaschine nach Anspruch 1, dadurch gekennzeichnet, daß die Plottertrageinrichtung als Rahmen (34a, 34b) ausgebildet ist, der mittels zweier Laufwagen längs einer sich längs eines Randes des Zeichenbrettes (30) erstreckenden Führung verfahrbar ist.

4. Zeichenmaschine nach Anspruch 1 bis 3, dadurch gekennzeichnet, daß die Plottertrageinrichtung (34; 34a; 34b) ebenfalls auf der für den den Zeichenkopf (26') tragenden Laufwagen (22) vorgesehenen Führung verfahrbar ist.

5. Zeichenmaschine nach Anspruch 2, dadurch gekennzeichnet, daß der bzw. die Laufwagen der Plottertrageinrichtung (34; 34a; 34b) als in die Laufwagenführung der Laufwagen-Zeichenmaschine (10) lösbar einhängbarer Laufwagen ausgebildet sind.

6. Zeichenmaschine nach einem der Ansprüche 2 bis 5, dadurch gekennzeichnet, daß das Zeichenbrett (30) und die Führung für die Plottertrageinrichtung (34; 34a, 34b) zur Aufnahme des Plotters (32) in seiner Ruhestellung seitlich über den Zeichenbereich der Zeichenfläche hinaus verlängert sind.

7. Zeichenmaschine nach Anspruch 1, dadurch gekennzeichnet, daß die Führung für die Plottertrageinrichtung (34; 34a, 34b) als zusätzliche Führung an der Laufwagen-Zeichenmaschine (10) vorgesehen ist.

8. Zeichenmaschine nach einem der Ansprüche 1 bis 7, dadurch gekennzeichnet, daß längs der Führung für die Plottertrageinrichtung (34; 34a, 34b) zum Erleichtern der Positionierung der Plottertrageinrichtung definierte Raststellungen vorgesehen sind.

9. Zeichenmaschine nach einem oder mehreren der Ansprüche 1 bis 8, dadurch gekennzeichnet, daß der Zeichenkopf (26') gegen einen Schreib/Lesestift-Träger (26) auswechselbar ist.

10. Zeichenmaschine nach Anspruch 9, dadurch gekennzeichnet, daß Positionserfassungseinrichtungen für das Erfassen der jeweiligen X-Y-Koordinaten des Zeichenkopfes (26') bzw. Schreib/Lesestift-Trägers (26) vorgesehen sind, daß Speichereinrichtungen (Rechner 12) vorgesehen sind, die mit den Positionserfassungseinrichtungen verbunden sind, und daß Steuereinrichtungen (Rechner 12, Tastatur 14) vorgesehen sind, durch die von Hand herbeigeführte Bewegungen des Zeichenkopfes (26') bzw. Schreib/Lesestift-Trägers (26) gegenüber der Zeichenfläche in Form der durchlaufenden X-Y-Koordinaten digital aufzeichenbar sind und durch die der Zeichenkopf (26') bzw. Schreib/Lesestift-Träger (26) in Abhängigkeit von gespeicherten und/oder über eine Tastatur (14) eingegebenen digitalen X-Y-Koordinatendaten zu Relativbewegungen gegenüber der Zeichenfläche freigebbar ist.

11. Zeichenmaschine nach Anspruch 9 oder 10, dadurch gekennzeichnet, daß für den Zeichenkopf (26') bzw. Schreib/Lesestift-Träger (26) zur Herbeiführung eines elektronischen Gewichtsausgleichs eine Servoelektronik vorgesehen ist.

12. Zeichenmaschine nach Anspruch 11, dadurch gekennzeichnet, daß die Servoelektronik mindestens einen Positionierungsmotor und Einrichtungen zur Wegmessung umfaßt.

13. Zeichenmaschine nach einem der Ansprüche 11 oder 12, dadurch gekennzeichnet, daß die Servoelektronik derart steuerbar ist, daß sich für die Bewegungen des Zeichenkopfes (26') bzw. Schreib/Lesestift-Trägers (26) eine elektronische Kulissenführung ergibt.

14. Zeichenmaschine nach einem der Ansprüche 1 bis 13, dadurch gekennzeichnet, daß Programmiereinrichtungen (Tastatur 14) für die Vorgabe mindestens eines Ansetzpunktes für den Plotter (32) vorgesehen sind.

**Revendications**

1. Appareil à dessiner (10) avec une aire de travail prévue sur une planche à dessiner (30) et une tête à dessiner (26') qui peut être déplacée sur l'aire de travail à l'aide d'un chariot, caractérisé par le fait qu'il est prévu outre la tête à dessiner (26') un support d'imprimante graphique (34; 34a, 34b) mobile également par rapport à l'aire de travail grâce à un chariot et portant une imprimante graphique (32) commandée par calculateur et dont le stylet (36) peut être déplacé par rapport au support d'imprimante graphique sous l'effet des ordres donnés par le calculateur (12), sur une partie déterminée de l'aire de travail de l'appareil à dessiner (10).

2. Appareil à dessiner suivant la revendication 1, caractérisé par le fait que le support d'imprimante graphique est conçu comme bras-support (34) qui, à l'aide d'un chariot, coulisse dans un guidage le long d'un bord de la planche à dessiner (30).

3. Appareil à dessiner suivant la revendication 1, caractérisé par le fait que le support d'imprimante graphique est conçu comme cadre (34a, 34b) qui, à l'aide de ceux chariots, peut être déplacé dans un guidage le long d'un bord de la planche à dessiner (30).

4. Appareil à dessiner suivant les revendications 1 à 3, caractérisé par le fait que le support d'imprimante graphique (34; 34a; 34b) se déplace également le long du guidage prévu pour le chariot (22) qui porte la tête à dessiner (26').

5. Appareil à dessiner suivant la revendication 2, caractérisé par le fait que le ou les chariots du support d'imprimante graphique (34; 34a, 34b) sont conçus comme chariots amovibles pouvant être appliqués sur le guidage du chariot de l'appareil à dessiner (10).

6. Appareil à dessiner suivant l'une des revendications 2 à 5, caractérisé par le fait que la planche à dessiner (30) et la guidage du support d'imprimante graphique (34; 34a, 34b) peuvent être prolongés en dehors de la longueur de l'aire de travail pour mettre l'imprimante graphique (32) en position de repos.

7. Appareil à dessiner suivant la revendication 1, caractérisé par le fait que le guidage pour le support d'imprimante graphique (34; 34a, 34b) est prévu comme guidage supplémentaire sur l'appareil à dessiner (10).

8. Appareil à dessiner suivant l'une des revendications 1 à 7, caractérisé par le fait que le long du guidage du support d'imprimante graphique (34; 34a, 34b), il est prévu des repères définis pour faciliter le positionnement dudit support.

**0 061 755**

9. Appareil à dessiner suivant l'une ou plusieurs des revendications 1 à 8, caractérisé par le fait que la tête à dessiner (26') peut être remplacée par un porte-stylet/palpeur (26).

10. Appareil à dessiner suivant la revendication 9, caractérisé par le fait qu'il est prévu des dispositifs d'acquisition des coordonnées X et Y des positions de la tête à dessiner (26') ou du porte-stylet/palpeur (26), qu'il est prévu des organes de mémorisation (calculateur 12) reliés aux dispositifs d'acquisition précités, et qu'il est prévu des organes (calculateur 12, clavier 14) permettant l'enregistrement digital des déplacements exécutés manuellement de la tête à dessiner (26') ou du porte-stylet/palpeur (26) par rapport à l'aire de travail, sous forme des coordonnées respectives en X et Y, ou permettant le déplacement par rapport à l'aire de travail de la tête à dessiner (26') ou du porte-stylet/palpeur (26) en fonction de données digitales en coordonnées X, Y mémorisées et/ou introduites à l'aide d'un clavier (14).

11. Appareil à dessiner suivant la revendication 9 ou 10, caractérisé par le fait qu'il est prévu pour la tête à dessiner (26') ou le porte-stylet/palpeur (26) un dispositif électronique de compensation de poids.

12. Appareil à dessiner suivant la revendication 11, caractérisé par le fait que le dispositif électronique comprend au moins un moteur de positionnement et des organes pour la mesure des déplacements.

13. Appareil à dessiner suivant l'une des revendications 11 ou 12, caractérisé par le fait que le dispositif électronique peut être commandé de sorte qu'il en résulte un guidage en coulisse électronique des déplacements de la tête à dessiner (26') ou du porte-stylet/palpeur (26).

14. Appareil à dessiner suivant l'une des revendications 1 à 13, caractérisé par le fait qu'il est prévu des dispositifs de programmation (clavier 14) permettant l'entrée d'au moins un point de départ pour l'imprimante graphique (32).

**Claims**

1. Carriage drawing machine (10) comprising a drawing surface disposed on a drawing board (30) and a drawing head (26') movable by carriage means over the drawing surface, characterized in that in addition to the drawing head (26') a plotter support means (34; 34a, 34b) likewise movable by carriage means over the drawing surface is provided which comprises a computer-controlled plotter (32) and the write stylus (36) of which is movable corresponding to the control commands of the computer (12) relatively to the plotter support means in each case in a limited partial area of the drawing area of the drawing machine (10).

2. Drawing machine according to claim 1, characterized in that the plotter support means is constructed as support arm (34) which is movable by means of a carriage along a guide extending along one edge of the drawing board (30).

3. Drawing machine according to claim 1, characterized in that the plotter support means is constructed as frame (34a, 34b) which by means of two carriages is movable along a guide extending along an edge of the drawing board (30).

4. Drawing machine according to claims 1 to 3, characterized in that the plotter support means (34; 34a, 34b) is also movable on the guide provided for the carriage (22) carrying the drawing head (26').

5. Drawing machine according to claim 2, characterized in that the carriage or carriages of the plotter support means (34; 34a, 34b) are constructed as carriages detachably suspendable in the carriage guide of the carriage drawing machine (10).

6. Drawing machine according to any one of claims 2 to 5, characterized in that the drawing board (30) and the guide for the plotter support means (34; 34a, 34b) for receiving the plotter (32) in its rest position are extended laterally beyond the drawing region of the drawing surface.

7. Drawing machine according to claim 1, characterized in that the guide for the plotter support means (34; 34a, 34b) is provided as additional guide on the carriage drawing machine (10).

8. Drawing machine according to any one of claims 1 to 7, characterized in that along the guide for the plotter support means (34; 34a, 34b) for facilitating the positioning of the plotter support means defined detent positions are provided.

9. Drawing machine according to one or more of claims 1 to 8, characterized in that the drawing head (26') is adapted to be replaced by a write/read stylus carrier (26).

10. Drawing machine according to claim 9, characterized in that position detecting means are provided for detecting the particular X-Y coordinates of the drawing head (26') or write/read stylus carrier (26), that memory means (computer 12) are provided which are connected to the position detecting means, and that control means (computer 12, keyboard 14) are provided by which movements of the drawing head (26') or write/read stylus carrier (26) made by hand with respect to the drawing surface can be digitally recorded in the form of the traversed X-Y coordinates and by which the drawing head (26') or write/read stylus carrier (26) is released for relative movements with respect to the drawing surface in dependence upon digital X-Y coordinate data stored and/or entered via a keyboard (14).

11. Drawing machine according to claim 9 or 10, characterized in that for the drawing head (26') or write/read stylus carrier (26) servo electronics are provided for producing an electronic weight compensation.

12. Drawing machine according to claim 11, characterized in that the servo electronics includes at least one positioning motor and means for travel measurement.

13. Drawing machine according to any one of claims 11 or 12, characterized in that the servo electronics are controllable in such a manner that an electronic slide guide results for the movements of the drawing head (26') or write/read stylus carrier (26).

14. Drawing machine according to any one of claims 1 to 13, characterized in that programming means (keyboard 14) are provided for defining at least one application point for the plotter (32).

Fig. 1

0 061 755

Fig. 2